# EUROPEAN PATENT SPECIFICATION

(11) **EP 4 106 112 B1**
(45) Date of publication and mention of the grant of the patent: **09.04.2025**
(21) Application number: 22179273.2
(22) Date of filing: 15.06.2022
(51) Int. Cl.: H01R 13/518, H01R 12/72, B60Q 1/00, F21S 41/19, F21S 43/19

(54) **ELECTRICAL CONNECTION SYSTEM FOR A VEHICLE HEADLIGHT OR LAMP AND ASSOCIATED LIGHTING DEVICE**
ELEKTRISCHES VERBINDUNGSSYSTEM FÜR EINEN FAHRZEUGSCHEINWERFER ODER EINE LEUCHTE UND ZUGEHÖRIGE BELEUCHTUNGSVORRICHTUNG
SYSTÈME DE CONNEXION ÉLECTRIQUE POUR UN PHARE OU UNE LAMPE DE VÉHICULE ET DISPOSITIF D'ÉCLAIRAGE ASSOCIÉ

(30) Priority: 18.06.2021 IT 202100016016
(43) Date of publication of application: 21.12.2022
(73) Proprietor: Marelli Automotive Lighting Italy S.p.A. Con Socio Unico, 10078 Venaria Reale (TO) (IT)
(72) Inventor: FALESSI, Alessandro, 10078 VENARIA REALE (TO) (IT); SPECIALE, Alessandro, 10078 VENARIA REALE (TO) (IT)
(74) Representative: Novagraaf Group

(56) References cited:
- EP-A2- 2 182 592
- US-A- 5 184 961
- US-A- 5 443 403
- US-A1- 2019 363 480

## Description

### Technical field of the invention

The invention relates to an improved electrical connection system especially configured to be used in lighting devices for vehicles, such as headlights or lamps. The invention further relates to an associated lighting device for vehicles, such as a headlight or lamp, equipped with said electrical connection system.

### Prior Art

As it is known, modern vehicle lighting devices, in particular motor vehicle headlights, are equipped with numerous devices requiring a supply of power, hence not only with a plurality of light sources, such as LEDs or LED batteries, to fulfil the different lighting functions to be provided (low beam, high beam, DRL), but also motor/actuators to orient or rotate the lighting beams produced by the light sources and/or to select the intensity or the colour thereof.

Therefore, all these electrical functions require the use of a plurality of electrical connectors, which are designed to connect the different services of the lighting device to the electrical system of the vehicle and to the relative control units.

Hence, the electrical connection operation carried out when the lighting device is installed on board the vehicle is time-consuming and complicated (thus, expensive), also due to the limited space available for operators, in particular in case of headlights or lamps whose power supply is accessible through the sole engine compartment of the vehicle. Indeed, operators have to fit, one at a time, a plurality of connectors, which are carried by a wiring harness that is part of an electrical circuit of the vehicle, onto the respective contacts of the lighting device, which are carried, usually in an integral manner, by a rear part of a housing or projector body, on the outside or on the inside (accessible through a rear through opening) thereof. The fact that these contacts, which are now gathered side by side and in line with one another (i.e. are arranged in tandem) on a side, for example the upper side, of one single power-supply printed circuit board of the lighting device, which is carried by the housing in an integral manner, does not eliminate the drawbacks described above.

Document US 5 184 961 A illustrates a prior art support holding several connectors.

### Summary of the invention

The object of the invention is to provide an electrical connection system for a lighting device for vehicles, such as a headlight or a lamp, which overcomes the aforesaid drawbacks, ensuring a quick and safe assembly of a plurality of electrical connectors laterally projecting from a substantially straight flexible wiring harness of the electrical circuit of a vehicle.

Therefore, the invention relates to an electrical connection system for a lighting device for vehicles, such as a headlight or lamp, according to the appended claims.

The invention further relates to an associated lighting device and to a vehicle provided with said lighting device.

In particular, the electrical connection system comprises a plurality of electrical contacts arranged in tandem, aligned side by side and in series with one another, each electrical contact being configured to be carried, in an integral manner, by a housing of a lighting device for vehicles, and a plurality of corresponding electrical connectors carried in an integral manner by, and projecting sideways from, a flexible wiring harness.

According to an aspect of the invention, the electrical connection system further comprises a support shaped like a frame and provided with a plurality of seats configured to each accommodate a respective electrical connector, the seats being arranged in tandem, aligned side by side and in series with one another in a longitudinal manner along the support and each having, on the side of a first longitudinal face of the support, respective inlet openings, each inlet opening being configured to receive a respective electrical connector housed in the respective seat.

The seats each have, on the side of a second longitudinal face of the support, opposite the first face, at least one shoulder element facing the inlet opening of the respective seat and configured to receive in contact therewith, according to a direction that is transverse to said first and second faces, a first end of a respective electrical connector opposite a second end thereof and configured to be electrically and mechanically coupled to said electrical contact; whereas the inlet openings are provided with snap retaining elements for the electrical connectors, the retaining elements facing the second longitudinal face of the support and being configured to retain the electrical connectors between the snap retaining elements and said shoulder elements, within the seats.

The second end of the electrical connectors is preferably configured to protrude from the respective housing seat, on the side of the first longitudinal face of the support.

In the electrical connection system according to the invention, furthermore, the first end of the electrical connectors has a transverse extension that is greater than the one of the second end thereof and is configured to cooperate with the snap retaining elements so as to be clamped, in a packed manner, between them and the shoulder elements.

The support is delimited, between its first and second longitudinal faces, by a pair of opposite longitudinal flanks transversely delimiting the seats.

A first longitudinal flank is provided with a plurality of through openings, each arranged in the area of a respective seat. The through openings are U-shaped and are open towards the first longitudinal face so as to interrupt a first edge of the first longitudinal flank. Said first edge faces to the side of the first longitudinal face and delimits part of the first longitudinal face.

The through openings are configured to laterally receive, in a through manner and transversely to the first longitudinal flank, respective branches of the flexible wiring harness laterally projecting from the latter and each provided, in in correspondence with a free end thereof, with a respective electrical connector.

The support is made of a synthetic plastic material and comprises a pair of longitudinal side members constituting the opposite flanks thereof, said flanks being each delimited between a first longitudinal edge and second longitudinal edge thereof, opposite one another.

The frame-shaped support further comprises a plurality of substantially rigid cross-members connecting the side members to one another in one single piece. The cross-members are obtained substantially flush with the second longitudinal edge of each side member and delimit, with the second longitudinal edges of the side members, the second longitudinal face of the support, so that the latter is provided with a plurality of through windows communicating with the seats.

The inlet openings of the seats are delimited by the first longitudinal edges of the side members, which are provided with snap retaining elements for the electrical connectors.

The U-shaped through openings of the first longitudinal flank of the support detach, on the latter, a plurality of elastically flexible feet protruding on the side of the first longitudinal face and each arranged between a pair of seats immediately adjacent to one another.

Said feet are each provided with a first tooth extending in a longitudinal direction within both seats of each pair of seats immediately adjacent to one another and facing the seats.

Furthermore, the cross members are substantially shaped, in a transverse direction, like an asymmetrical S so as to delimit, on the second face, first longitudinal slits connected to the through windows and each facing a first tooth, so as to allow the first tooth to be formed during the moulding phase.

Furthermore, the second longitudinal flank of the support, opposite the first flank, is provided, in correspondence with the seats, with a plurality of internally hollow bulges protruding from the second flank, on the side opposite the seats, and bearing, in correspondence with the seats, second teeth, which each extend within a respective seat and are obtained in correspondence with a first edge of the second longitudinal flank arranged substantially parallel and coplanar to the first edge of the first longitudinal flank, so that each second tooth is arranged flush with a corresponding first tooth.

The bulges are open on the side of the second longitudinal face so as to define, on the latter, respective second longitudinal slits facing respective third longitudinal slits obtained through respective end walls of the bulges and arranged immediately adjacent to corresponding sections of the first edge of the second longitudinal flank provided with the second teeth, so as to make said second sections of the first edge of the second longitudinal flank elastically deformable.

In the lighting device according to the invention, comprising an electrical connection system of the type described so far, the electrical contacts are carried by a longitudinal edge of a printed circuit board carried, in an integral manner, by a housing of the lighting device.

### Brief Description of the Drawings

Further features and advantages of the invention will be best understood upon perusal of the following description of a non-limiting embodiment thereof, with reference to the figures of the accompanying drawings, wherein:
- figure 1 schematically shows a known lighting device for vehicles, only part of a housing thereof being shown for the sake of simplicity, provided with the electrical connection system according to the invention;
- figure 2 schematically shows, on a larger scale, a three-quarter perspective view from the bottom of an essential component of the electrical connection system of figure 1;
- figure 3 schematically shows, on a further larger scale, a detail of the electrical connection system of figure 1;
- figure 4 schematically shows an orthogonal elevation view of the electrical connection system of figure 1;
- figures 5, 6 and 7 schematically show, on a larger scale and in elevation, respective sectional views, taken along planes V-V, VI-VI and VII-VII, of the electrical connection system of figure 4.

### Detailed description

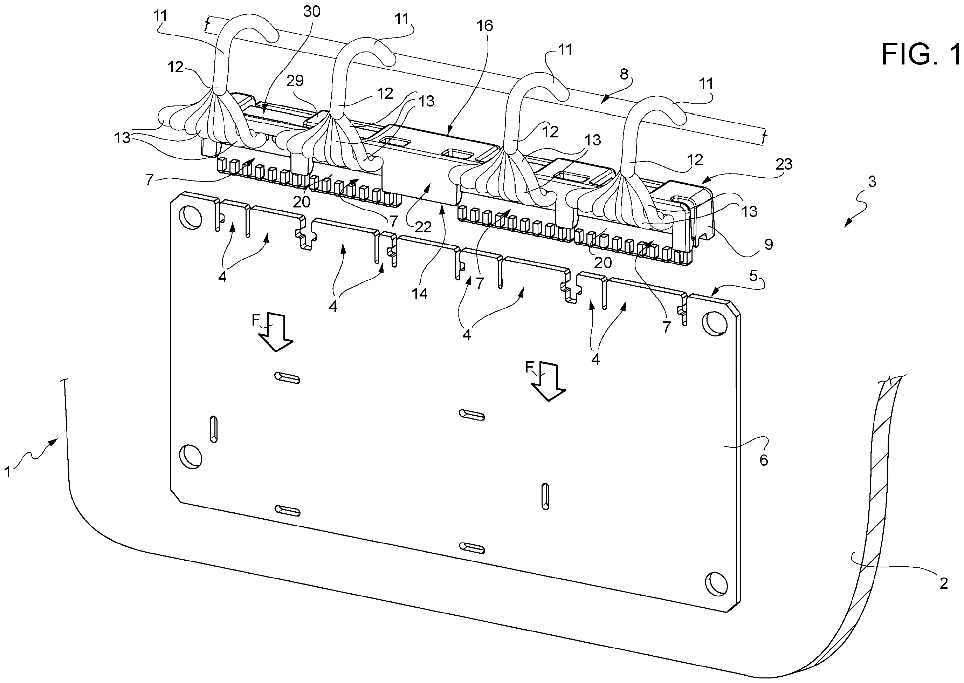

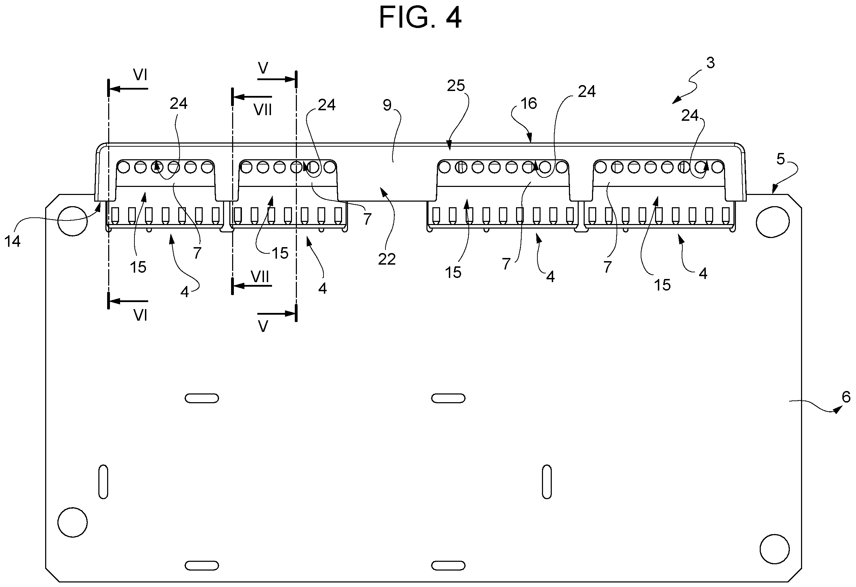

With reference to figures 1 and 4, reference number 1 indicates, as a whole, a lighting device (figure 1) for a vehicle, which is known and, therefore, is only partly represented. The vehicle, for it is known as well, is not shown for the sake of simplicity.

Of the lighting device 1 the figures only show, for the sake of simplicity, a housing or housing body 2, which is known, is normally manufactured through moulding of a synthetic plastic material, is cup-shaped and houses on the inside, in a known manner which is not shown herein, a plurality of known light sources, for example LEDs, and possible accessory and/or control devices, such as actuators, motors, control units, etcetera, which are also known.

All these devices, as well as the light sources, must electrically be powered by the electrical circuit (known and not shown) of a vehicle on which the lighting device 1 is mounted.

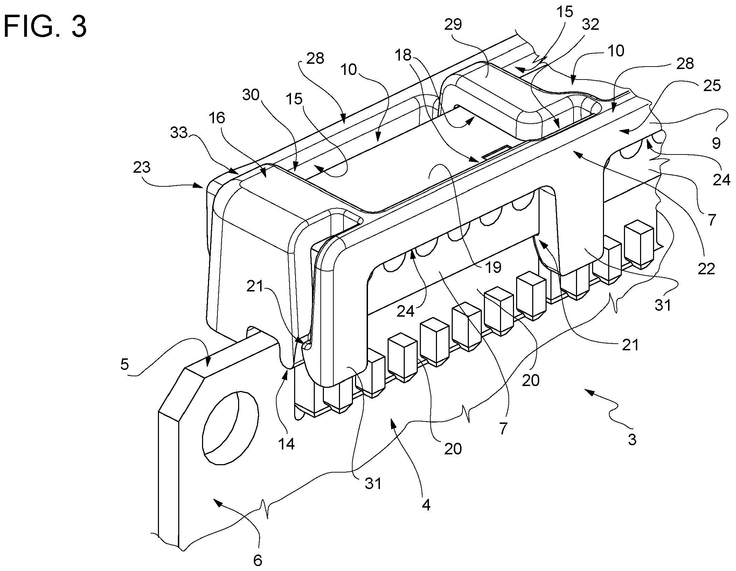

To this purpose, an electrical connection system 3 for the vehicle lighting device 1 is used, a detail thereof being shown, on a larger scale, in figure 3.

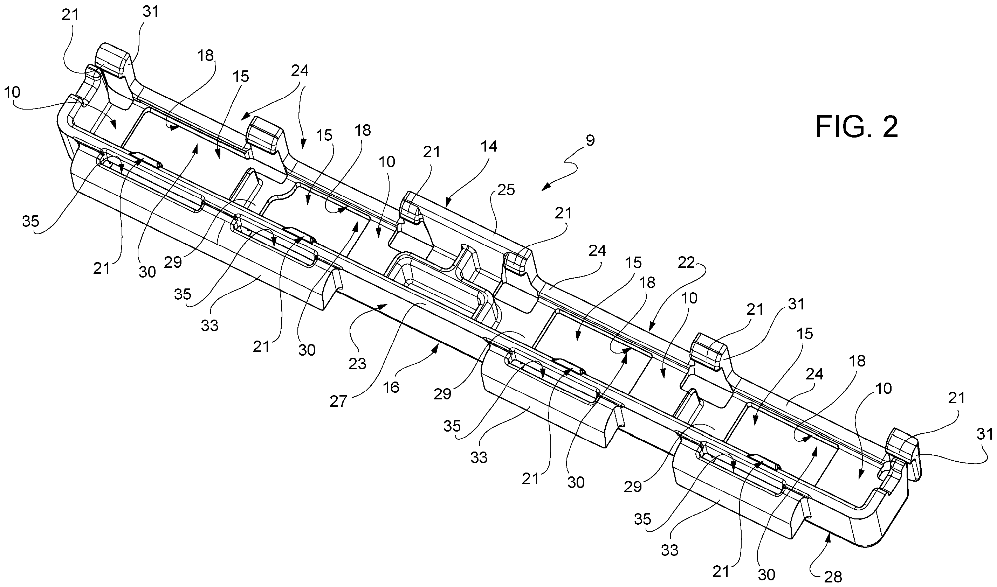

With reference now to figures 2, 3 and 5 as well, the connection system 3 comprises a plurality of electrical contacts 4 arranged in tandem, aligned side by side and in series with one another.

Each electrical contact 4 is configured to be carried, in an integral manner, by the housing 2 of the lighting device 1 for vehicles.

To this purpose, known contacts 4 are carried by a longitudinal edge 5 of a printed circuit board 6 carried in an integral manner, in a way that is known and not shown herein for the sake of simplicity, by the housing 2 of the lighting device 1, on the outside or on the inside thereof, in the last case accessible through a suitable through opening made in the housing 2.

The electrical connection system 3 also comprises a plurality of electrical connector 7, as many as the contacts 4, hence a connector 7 for each respective contact 4.

The electrical connectors 7 are integral to and project sideways from a flexible wiring harness 8 (figure 1), which is known and, in turn, is connected to the electrical circuit of the vehicle in a way that is known and not shown herein for the sake of simplicity.

According to an aspect of the invention, the electrical connection system 3 further comprises a support 9, which is shaped like a frame and is shown in detail, alone, in figure 2, in a three-quarter perspective view from the bottom, namely, in the example shown in said figure, observed from the side contrary to the direction in which the connectors 7 are inserted onto the contacts 4, indicated by arrows F in figure 1.

The support 9 is provided with a plurality of seats 10 configured to each accommodate one of the electrical connectors 7.

The seats 10 are arranged in tandem, aligned side by side and in series with one another in a longitudinal manner along the support 9 and are configured to place the electrical connectors 7 in the exact same sequence and at the exact same distance needed to create a correct connection to the electrical contacts 4.

In other words, the seats 10 (figure 2) are arranged one after the other at a distance that is identical to one at which the electrical contacts 4 are arranged one after the other, so that, once they receive the electrical connectors 7 in the way discussed below, the latter are exactly aligned with the electrical contacts 4 to which they have to be connected.

This innovative feature of the electrical connection system 3 of the invention is also linked to the fact that the electrical connectors 7 are carried by the flexible wiring harness 8 with a certain freedom of movement, since they are connected to respective branches 11 of the flexible wiring harness 8, which laterally project from the latter and are each provided, at a free end 12 thereof (figure 1), with a respective electrical contact 7 connected to the free end 12 by means of a series of electrical power supply wires 13, which are housed within the branches 11 in a through manner and along the entire flexible wiring harness 8.

As a consequence, each electrical connector 7 can be moved in any direction, within the limits of the length of the projecting extension of the respective branch 11 of the wiring harness 8.

The seats 10 each have, on the side of a first longitudinal face 14 of the support 9, respective inlet openings 15.

Each inlet opening 15 is configured to receive a respective electrical connector 7 housed in the respective seat 10, inserting it in a direction that is contrary to the one defined by the arrows F.

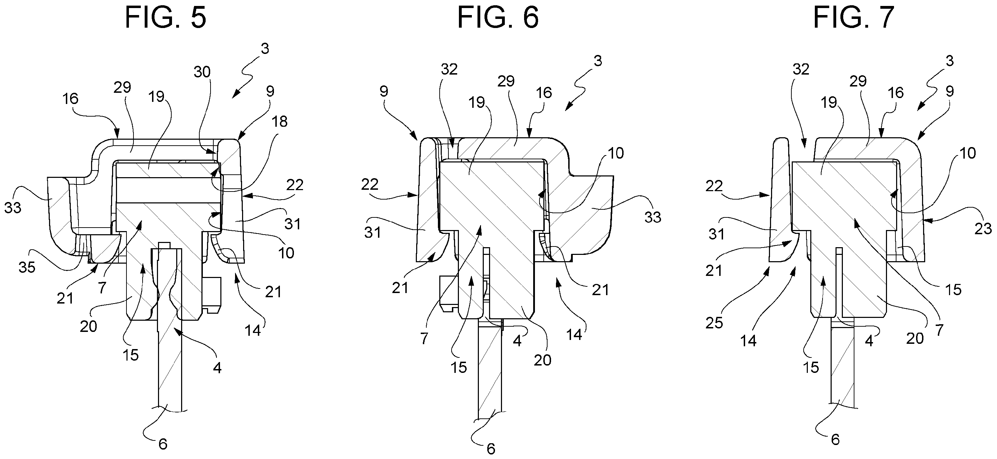

In particular, the seats 10 each have, on the side of a second longitudinal face 16 of the support, opposite the first face 14, at least one shoulder element 18 facing the inlet opening 15 of the respective seat 10 and configured to receive, in contact therewith and in a direction that is transverse to the first and second faces 14,16, a first end 19 (figures 5-7) of a respective electrical connector 7 opposite a second end 20 thereof and configured to be electrically and mechanically coupled, in a known manner, to a respective electrical contact 4, as shown, even though only schematically, in figures 5 to 7.

Preferably, the second end 20 of the electrical connectors 7 is configured to protrude from the respective seat 10 on the side of the first longitudinal face 14 of the support 9.

According to a further aspect of the invention, the inlet openings 15 are provided with snap retaining elements 21 for the electrical connectors 7.

The retaining elements 21 face the second longitudinal face 16 of the support 9 and are configured to hold the electrical contacts 7 between the snap retaining elements 21 themselves and the shoulder elements 18, within the seats 10.

The first end 19 of the electrical connectors 7 has a transverse extension that is greater than the one of the second end 20 thereof and is configured to cooperate with the snap retaining elements 21, above them, namely on the side of the face 16, so as to be clamped, in a packed manner, between them and the shoulder elements 18.

The support 9 is delimited, between its first and second longitudinal faces 14,16, by a pair of opposite longitudinal flanks 22,23, which transversely delimit the seats 10 and are substantially perpendicular or anyway transverse to the faces 14,16.

A first longitudinal flank 22 is provided with a plurality of through openings 24, each arranged in the area of / in correspondence with a respective seat 10.

The through openings 24 are U-shaped and are open towards the first longitudinal face 14 so as to interrupt a first edge 25 of the first longitudinal flank 22, said first edge 25 facing to the side of the first longitudinal face 14 and delimiting part of the first longitudinal face 14.

The through openings 24 are configured to receive, laterally going through them, crosswise to the first longitudinal flank 22, the respective branches 11 (figure 1) of the flexible wiring harness 8, in this case a bundle of electrical wires 13 coming out of the branch 11.

According to an aspect of the invention, the support 9 is made of a synthetic plastic material and comprises: a pair of longitudinal side members constituting/delimiting the aforesaid opposite flanks 22,23 and each delimited, in turn, between a first longitudinal edge 25 (of the side member constituting the flank 22) or 27 (of the side member constituting the flank 23) thereof and a second longitudinal edge 28 thereof, opposite one another (figures 2 and 3) .

The support 9 further comprises a plurality of substantially rigid cross-members 29 connecting the side members to one another in one single piece.

The cross-members 29 are obtained substantially flush with the second longitudinal edge 28 of each side member and delimit, with the second longitudinal edges 28 of the side members, the aforesaid second longitudinal face 16 of the support 9, so that the face 16 is provided with a plurality of through windows 30 communicating with the seats 10.

The inlet openings 15 of the seats 10 are delimited by the first longitudinal edges 25,27 of the side members, which are provided with the snap retaining elements 21 for the electrical connectors 7.

The U-shaped through openings 24 of the first longitudinal flank 22 detach, on the latter, a plurality of elastically flexible feet 31 protruding on the side of the first longitudinal face 14 and each arranged between a pair of seats 10 immediately adjacent to one another, as shown in figure 2.

The feet 31 are each provided with a first tooth 21, constituting one of the aforesaid retaining elements, which extends in a longitudinal direction within both seats 10 of the aforesaid pair of seats 10 immediately adjacent to one another and faces the seats 10.

In order to allow the teeth 21 to be easily manufactured ensuring a high overall compactness, the cross-members 29 are substantially shaped, in a transverse direction, like an asymmetrical S (figure 3) so as to delimit, on the second face 16, first longitudinal slits 32 (figures 3, 6 and 7) connected to the through windows 30 and each facing a tooth 21.

The second longitudinal flank 23 of the support 9, opposite the first flank 22, is provided, in the area of the seats 10, with a plurality of internally hollow bulges 33 protruding from the second flank 23, on the side opposite to the seats 10, and bearing, in the area of the seats 10, second teeth 21 constituting part of the aforesaid retaining means, which each extend within a respective seat 10 and are obtained in the area of the first edge 27 of the second longitudinal flank 23, which is arranged substantially parallel and coplanar to the first edge 25 of the first longitudinal flank 22, so that each second tooth 21 is arranged flush with a corresponding first tooth 21.

The bulges 33 are open on the side of the second longitudinal face 16 so as to define, on the latter (figure 5), respective second longitudinal slits 34 facing respective third longitudinal slits 35 (figures 3 and 5) obtained through respective end walls of the bulges 33 and arranged immediately adjacent to corresponding sections of the first edge 27 of the second longitudinal flank 23 provided with the second teeth 21 so as to make said sections of the first edge 27 of the second longitudinal flank 23 elastically deformable.

In use, the electrical connectors 7 are previously housed, in a snapping manner, within the seat 10, where they are firmly held, even though in a removable manner in case of need, by the teeth 21 and by the shoulders 18. This operation is simple and quick, since the connectors 7 are carried by the wiring harness 8 in a loose manner.

Once this operation is complete, the support 9 simply needs to be placed in front of the contacts 4, thanks to the fact that, at this point, the support 9/connectors 7 assembly is carried in a loose manner by means of the branches 11 of the wiring harness 8, and the support 9 has to be pushed in the direction of the arrows F, thus connecting all connectors 7 to all contacts 4 in the correct sequence and with one single operation, hence in a safe and quick manner.

Owing to the above, it is evident that the invention also extends to a lighting device 1 provided with the electrical connection system 3 and to a vehicle comprising a lighting device 1, headlight or lamp, according to the description and the drawings.

Hence, all the objects of the invention are reached.

## Claims

1. An electrical connection system (3) for a lighting device (1) for vehicles, for example a headlight or a lamp, the connection system comprising a plurality of electrical contacts (4) carried by a longitudinal edge (5) of a printed circuit board (6), which printed circuit board (6) being configured to be carried in an integral manner on the outside or inside of a housing (2) of said lighting device (1), and a plurality of corresponding electrical connectors (7) carried integral with and projecting sideways from a flexible wiring harness (8); wherein it further comprises a support (9) shaped like a frame and provided with a plurality of seats (10) each configured to accommodate one of said electrical connectors (7); said seats (10) being arranged in tandem, aligned side by side in series one to the other longitudinally along said support (9) and each one presenting, on the side of a first longitudinal face (14) of said support (9), respective inlet openings (15), each inlet opening (15) being configured to receive a respective electrical connector (7) housed in said seat; said seats (10) each presenting, on the side of a second longitudinal face (16) of the support, opposite to the first face, at least one shoulder element (18) facing the inlet opening (15) of the respective seat and configured to receive in contact therewith, according to a transversal direction to said first and second faces (14,16), a first end (19) of a respective electrical connector (7) opposite to a second end (20) thereof configured to electrically and mechanically couple with a said electrical contact (7); and wherein said support (9) is delimited, between said first and second longitudinal faces (14,16) thereof, by a pair of opposing longitudinal flanks (22,23) transversely delimiting said seats (10), said first longitudinal flank (22) being provided with a plurality of through openings (24) each disposed in correspondence with a respective seat (10); said through openings (24) being U-shaped and being open towards the first longitudinal face (14) so as to interrupt a first edge (25) of the first longitudinal flank (22), said first edge (25) being facing the side of the first longitudinal face (14) and delimiting part of the first longitudinal face; said through openings (24) being configured to receive laterally in a through manner, transversely to said first longitudinal flank (22), respective branches (11) of said flexible wiring harness (8) extending laterally cantilevering from the same and each being provided, in correspondence to one of its own free ends (12), with a said electrical connector (7); said support (9) being made of a synthetic plastic material and comprising: a pair of longitudinal side members constituting said opposite flanks (22,23) and each bounded between a first (25;27) and second longitudinal edges (28) thereof, opposed to each other; and a plurality of substantially rigid cross-members (29) connecting the side members to each other in one piece, said cross-members (29) being obtained substantially flush with the second longitudinal edge (28) of each side member and delimiting with the second longitudinal edges (28) of the side members the said second longitudinal face (16) of the support (9), so that the latter is provided with a plurality of through windows (30) communicating with said seats (10); wherein said U-shaped through openings (24) of said first longitudinal flank (22) detach on said first longitudinal flank a plurality of elastically flexible feet (31) extending cantilevered from said first longitudinal face (14) and each arranged between a pair of seats (10) immediately adjacent to each other; said feet (31) each being provided with a first tooth (21) extending in a longitudinal direction within both seats (10) of said pair of seats immediately adjacent to each other and facing said seats; said cross members (29) being shaped in a transverse direction substantially as an asymmetrical S so as to delimit on said second face (16) first longitudinal slits (32) connected with said through windows (30) and each facing one of said first tooth (21).

2. Electrical connection system according to claim 1, **characterized in that** said second end (20) of said electrical connectors (7) is configured to protrude cantilevered from the respective said seat (10) by the side of said first longitudinal face (14) of the support (9).

3. Electrical connection system according to claim 1 or 2, **characterized in that** said inlet openings (15) are provided with snap retaining elements (21) for said electrical connectors (7), the retaining elements (21) facing towards the second longitudinal face (16) of the support (9) and being configured to retain said electrical connectors (7) between said snap retaining elements (21) and said shoulder elements (18), within said seats (10).

4. Electrical connection system according to claim 3, **characterized in that** said first end (19) of said electrical connectors (7) has a transverse extension greater than that of the second end (20) thereof and is configured to cooperate with said snap retaining elements (21) so as to be clamp packed between them and said shoulder elements (18).

5. Electrical connection system according to claim 1, **characterized in that** said inlet openings (15) of said seats (10) are bounded by said first longitudinal edges (25;27) of said side members, which are provided with snap retaining elements (21) for said electrical connectors (7).

6. Electrical connection system according to any one of claims 1 to 5, **characterized in that** a second longitudinal flank (23) of said support (9), opposite to said first flank, is provided in correspondence to said seats (10) with a plurality of internally hollow bulges (33) extending cantilevered from said second flank (23), on the side opposite to said seats (10), and bearing, in correspondence to said seats, second teeth (21) each extending within a respective seat (10) and which are obtained in correspondence to a first edge (27) of the second longitudinal flank (23) arranged substantially parallel and coplanar to the first edge (25) of the first longitudinal flank (22), so that each second tooth (21) is arranged flush with a corresponding first tooth (21); said bulges (33) being open on the side of the second longitudinal face (16) so as to define on the latter respective second longitudinal slots (34) facing respective third longitudinal slots (35) obtained passing through respective end walls of said bulges (33) and arranged immediately adjacent to corresponding sections of the first edge (27) of the second longitudinal flank (23) provided with said second teeth (21), so as to make said second sections of the first edge (27) of the second longitudinal flank elastically deformable.

7. A vehicle comprising a lighting device (1), headlamp or lamp, according to claim 1.

## Patentansprüche

1. Elektrisches Verbindungssystem (3) für eine Beleuchtungsvorrichtung (1) für Fahrzeuge, zum Beispiel einen Scheinwerfer oder eine Lampe, das Verbindungssystem umfassend eine Vielzahl von elektrischen Kontakten (4), die durch eine Längskante (5) einer Leiterplatte (6) getragen werden, wobei die Leiterplatte (6) konfiguriert ist, um auf der Außen- oder Innenseite eines Gehäuses (2) der Beleuchtungsvorrichtung (1) integral getragen zu werden, und eine Vielzahl von entsprechenden elektrischen Verbindern (7), die mit einem flexiblen Kabelbaum (8) integral getragen werden und seitlich davon hervorstehen; wobei es ferner eine Halterung (9) umfasst, die wie ein Rahmen gestaltet ist und mit einer Vielzahl von Aufnahmen (10) versehen ist, die jeweils konfiguriert sind, um einen der elektrischen Verbinder (7) unterzubringen; wobei die Aufnahmen (10) in Tandem angeordnet sind, in Längsrichtung entlang der Halterung (9) nebeneinander und in Reihe zueinander ausgerichtet sind und jeweils auf der Seite einer ersten Längsfläche (14) der Halterung (9) entsprechende Eingangsöffnungen (15) vorweisen, wobei jede Eingangsöffnung (15) konfiguriert ist, um einen entsprechenden elektrischen Verbinder (7) zu empfangen, der in der Aufnahme beherbergt ist; wobei die Aufnahmen (10) jeweils auf der Seite einer zweiten Längsfläche (16) der Halterung, die der ersten Fläche gegenüberliegt, mindestens ein Schulterelement (18) aufweisen, das der Eingangsöffnung (15) der jeweiligen Aufnahme zugewandt ist und konfiguriert ist, um in Kontakt damit gemäß einer Querrichtung zu der ersten und der zweiten Fläche (14, 16) ein erstes Ende (19) eines jeweiligen elektrischen Verbinders (7) zu empfangen, das einem zweiten Ende (20) davon gegenüberliegt, das konfiguriert ist, um mit einem der elektrischen Kontakte (7) elektrisch und mechanisch gekoppelt zu werden; und wobei die Halterung (9) zwischen der ersten und der zweiten Längsfläche (14, 16) davon durch ein Paar gegenüberliegender Längsflanken (22, 23) begrenzt ist, die die Aufnahmen (10) quer begrenzen, wobei die erste Längsflanke (22) mit einer Vielzahl von Durchgangsöffnungen (24) versehen ist, die jeweils in Entsprechung mit einer jeweiligen Aufnahme (10) eingerichtet sind; wobei die Durchgangsöffnungen (24) U-förmig sind und in Richtung der ersten Längsfläche (14) offen sind, um eine erste Kante (25) der ersten Längsflanke (22) zu unterbrechen, wobei die erste Kante (25) der Seite der ersten Längsfläche (14) zugewandt ist und einen Teil der ersten Längsfläche begrenzt; wobei die Durchgangsöffnungen (24) konfiguriert sind, um quer zu der ersten Längsflanke (22) jeweilige Zweige (11) des flexiblen Kabelbaums (8) lateral auf durchgehende Weise zu empfangen, die sich lateral freitragend von demselben erstrecken und jeweils in Entsprechung mit einem ihrer eigenen freien Enden (12) mit einem elektrischen Verbinder (7) versehen sind; wobei die Halterung (9) aus einem synthetischen Kunststoffmaterial hergestellt ist und umfasst: ein Paar von Längsseitengliedern, die die gegenüberliegenden Flanken (22, 23) ausbilden und jeweils zwischen einer ersten (25; 27) und einer zweiten Längskante (28) eingegrenzt sind, die einander gegenüberliegen; und eine Vielzahl von im Wesentlichen starren Quergliedern (29), die die Seitenglieder einstückig miteinander verbinden, wobei die Querglieder (29) im Wesentlichen bündig mit der zweiten Längskante (28) jedes Seitenglieds ausgebildet sind und mit den zweiten Längskanten (28) der Seitenglieder die zweite Längsfläche (16) der Halterung (9) so begrenzen, dass letztere mit einer Vielzahl von Durchgangsfenstern (30) versehen ist, die mit den Aufnahmen (10) in Kommunikation stehen;
wobei die U-förmigen Durchgangsöffnungen (24) der ersten Längsflanke (22) an der ersten Längsflanke eine Vielzahl elastisch biegsamer Füße (31) ablösen, die sich freitragend von der ersten Längsfläche (14) erstrecken und jeweils zwischen einem Paar unmittelbar nebeneinander liegender Aufnahmen (10) angeordnet sind; wobei die Füße (31) jeweils mit einem ersten Zahn (21) versehen sind, der sich in einer Längsrichtung innerhalb der beiden Aufnahmen (10) des Paars von Aufnahmen erstreckt, die unmittelbar nebeneinander liegen, und den Aufnahmen zugewandt ist; wobei die Querglieder (29) in einer Querrichtung im Wesentlichen als ein asymmetrisches S geformt sind, um auf der zweiten Fläche (16) erste Längsschlitze (32) zu begrenzen, die mit den Durchgangsfenstern (30) verbunden sind und jeweils einem des ersten Zahns (21) zugewandt sind.

2. Elektrisches Verbindungssystem nach Anspruch 1,
**dadurch gekennzeichnet, dass** das zweite Ende (20) der elektrischen Verbinder (7) konfiguriert ist, um freitragend von der jeweiligen Aufnahme (10) an der Seite der ersten Längsfläche (14) der Halterung (9) vorzuspringen.

3. Elektrisches Verbindungssystem nach Anspruch 1 oder 2,
**dadurch gekennzeichnet, dass** die Eingangsöffnungen (15) mit Schnapprückhalteelementen (21) für die elektrischen Verbinder (7) versehen sind, wobei die Halteelemente (21) in Richtung der zweiten Längsfläche (16) der Halterung (9) gewandt und konfiguriert sind, um die elektrischen Verbinder (7) zwischen den Schnapprückhalteelementen (21) und den Schulterelementen (18) innerhalb der Aufnahmen (10) zurückzuhalten.

4. Elektrisches Verbindungssystem nach Anspruch 3,
**dadurch gekennzeichnet, dass** das erste Ende (19) der elektrischen Verbinder (7) eine größere Quererstreckung als das zweite Ende (20) davon aufweist und konfiguriert ist, um mit den Schnapprückhalteelementen (21) zusammenzuwirken, um zwischen ihnen und den Schulterelementen (18) festgeklemmt zu sein.

5. Elektrisches Verbindungssystem nach Anspruch 1,
**dadurch gekennzeichnet, dass** die Eingangsöffnungen (15) der Aufnahmen (10) durch die ersten Längskanten (25; 27) der Seitenglieder eingegrenzt werden, die mit Schnapprückhalteelementen (21) für die elektrischen Verbinder (7) versehen sind.

6. Elektrisches Verbindungssystem nach einem der Ansprüche 1 bis 5, **dadurch gekennzeichnet, dass** eine zweite Längsflanke (23) der Halterung (9), die der ersten Flanke gegenüberliegt, in Entsprechung mit den Aufnahmen (10) mit einer Vielzahl von innen hohlen Ausbuchtungen (33), die sich freitragend von der zweiten Flanke (23) auf der Seite erstrecken, die den Aufnahmen (10) gegenüberliegt, und in Entsprechung mit den Aufnahmen mit zweiten Zähnen (21) versehen ist, die sich jeweils innerhalb einer jeweiligen Aufnahme (10) erstrecken und in Entsprechung mit einer ersten Kante (27) der zweiten Längsflanke (23) erhalten werden, die im Wesentlichen parallel und koplanar zu der ersten Kante (25) der ersten Längsflanke (22) so angeordnet sind, dass jeder zweite Zahn (21) bündig mit einem entsprechenden ersten Zahn (21) angeordnet ist;
wobei die Ausbuchtungen (33) auf der Seite der zweiten Längsfläche (16) offen sind, um auf dieser jeweilige zweite Längsschlitze (34) zu definieren, die jeweiligen dritten Längsschlitzen (35) zugewandt sind, die durch jeweilige Endwände der Ausbuchtungen (33) verlaufen und unmittelbar neben entsprechenden Abschnitten der ersten Kante (27) der zweiten Längsflanke (23) angeordnet sind, die mit den zweiten Zähnen (21) versehen ist, um die zweiten Abschnitte der ersten Kante (27) der zweiten Längsflanke elastisch verformbar zu machen.

7. Fahrzeug, umfassend eine Beleuchtungsvorrichtung (1), einen Scheinwerfer oder eine Lampe nach Anspruch 1.

## Revendications

1. Système de connexion électrique (3) pour un dispositif d'éclairage (1) destiné à des véhicules, par exemple un phare ou un feu, le système de connexion comprenant une pluralité de contacts électriques (4) portés par un bord longitudinal (5) d'une carte à circuit imprimé (6), cette carte à circuit imprimé (6) étant conçue pour être portée de manière solidaire sur l'extérieur ou l'intérieur d'un boîtier (2) dudit dispositif d'éclairage (1), et une pluralité de connecteurs électriques (7) correspondants portés solidaires, et faisant saillie latéralement, d'un faisceau de câbles flexible (8) ; dans lequel il comprend en outre un support (9) mis en forme à la manière d'un cadre et pourvu d'une pluralité de logements (10) conçus chacun pour recevoir l'un desdits connecteurs électriques (7) ; lesdits logements (10) étant agencés en tandem, alignés côte à côte en série l'un par rapport à l'autre longitudinalement le long dudit support (9) et présentant chacun, sur le côté d'une première face longitudinale (14) dudit support (9), des ouvertures d'entrée (15) respectives, chaque ouverture d'entrée (15) étant conçue pour recevoir un connecteur électrique (7) respectif logé dans ledit logement ; lesdits logements (10) présentant chacun, sur le côté d'une seconde face longitudinale (16) du support, opposé à la première face, au moins un élément d'épaulement (18) faisant face vers l'ouverture d'entrée (15) du logement respectif et conçu pour recevoir en contact avec celui-ci, selon une direction transversale auxdites première et seconde faces (14, 16), une première extrémité (19) d'un connecteur électrique (7) respectif, opposée à une seconde extrémité (20) de celui-ci configurée pour se coupler électriquement et s'accoupler mécaniquement à un contact électrique (7) précité ; et dans lequel ledit support (9) est délimité, entre lesdites première et seconde faces longitudinales (14, 16) de celui-ci, par une paire de flancs longitudinaux (22, 23) opposés délimitant transversalement lesdits logements (10), ledit premier flanc longitudinal (22) étant pourvu d'une pluralité d'ouvertures traversantes (24) disposées chacune en correspondance avec un logement (10) respectif ; lesdites ouvertures traversantes (24) étant en forme de U et étant ouvertes en direction de la première face longitudinale (14) de façon à interrompre un premier bord (25) du premier flanc longitudinal (22), ledit premier bord (25) faisant face vers le côté de la première face longitudinale (14) et délimitant une partie de la première face longitudinale ; lesdites ouvertures traversantes (24) étant conçues pour recevoir latéralement d'une manière traversante, transversalement audit premier flanc longitudinal (22), des branches (11) respectives dudit faisceau de câbles flexible (8) s'étendant latéralement en porte-à-faux à partir de celui-ci et étant pourvues chacune, en correspondance avec l'une de ses propres extrémités libres (12), dudit connecteur électrique (7) ; ledit support (9) étant fabriqué dans un matériau plastique synthétique et comprenant : une paire d'éléments latéraux longitudinaux constituant lesdits flancs (22, 23) opposés et étant délimités chacun entre des premier (25 ;27) et second bords longitudinaux (28) de celui-ci, opposés l'un à l'autre ; et une pluralité d'éléments transversaux (29) sensiblement rigides reliant les éléments latéraux les uns aux autres en une pièce, lesdits éléments transversaux (29) étant obtenus sensiblement affleurants au second bord longitudinal (28) de chaque élément latéral et délimitant avec les seconds bords longitudinaux (28) des éléments latéraux, ladite seconde face longitudinale (16) du support (9), de sorte que ce dernier est pourvu d'une pluralité de fenêtres traversantes (30) communiquant avec lesdits logements (10) ;
dans lequel lesdites ouvertures traversantes (24) en forme de U dudit premier flanc longitudinal (22) détachent sur ledit premier flanc longitudinal une pluralité de pieds élastiquement flexibles (31) s'étendant en porte-à-faux à partir de ladite première face longitudinale (14) et agencés chacun entre une paire de logements (10) immédiatement adjacents les uns aux autres ; lesdits pieds (31) étant pourvus chacun d'une première dent (21) s'étendant dans une direction longitudinale au sein de l'un et l'autre des logements (10) de ladite paire de logements immédiatement adjacents l'un à l'autre et faisant face vers lesdits logements ; lesdits éléments transversaux (29) étant mis en forme dans une direction transversale sensiblement en tant que S asymétrique de façon à délimiter sur ladite seconde face (16) des premières fentes longitudinales (32) reliées auxdites fenêtres traversantes (30) et faisant face chacune vers l'une de ladite première dent (21).

2. Système de connexion électrique selon la revendication 1,
**caractérisé en ce que** ladite seconde extrémité (20) desdits connecteurs électriques (7) est conçue pour faire saillie en porte-à-faux dudit logement (10) respectif par le côté de ladite première face longitudinale (14) du support (9).

3. Système de connexion électrique selon la revendication 1 ou 2,
**caractérisé en ce que** lesdites ouvertures d'entrée (15) sont pourvues d'éléments de retenue (21) encliquetables pour lesdits connecteurs électriques (7), les éléments de retenue (21) faisant face vers la seconde face longitudinale (16) du support (9) et étant conçus pour retenir lesdits connecteurs électriques (7) entre lesdits éléments de retenue (21) encliquetables et lesdits éléments d'épaulement (18), au sein desdits logements (10).

4. Système de connexion électrique selon la revendication 3,
**caractérisé en ce que** ladite première extrémité (19) desdits connecteurs électriques (7) a une extension transversale supérieure à celle de la seconde extrémité (20) de ceux-ci et est conçue pour coopérer avec lesdits éléments de retenue (21) encliquetables de façon à être tassés par serrage entre eux et lesdits éléments d'épaulement (18).

5. Système de connexion électrique selon la revendication 1,
**caractérisé en ce que** lesdites ouvertures d'entrée (15) desdits logements (10) sont délimités par lesdits premiers bords longitudinaux (25 ;27) desdits éléments latéraux, qui sont pourvus d'éléments de retenue (21) encliquetables pour lesdits connecteurs électriques (7).

6. Système de connexion électrique selon l'une quelconque des revendications 1 à 5, **caractérisé en ce qu'un** second flanc longitudinal (23) dudit support (9), opposé audit premier flanc, est pourvu en correspondance avec lesdits logements (10) d'une pluralité de renflements (33) creux à l'intérieur, s'étendant en porte-à-faux à partir dudit second flanc (23), sur le côté opposé auxdits logements (10), et portant, en correspondance avec lesdits logements, des secondes dents (21) s'étendant chacune au sein d'un logement (10) respectif et qui sont obtenues en correspondance avec un premier bord (27) du second flanc longitudinal (23) agencé sensiblement parallèle et coplanaire au premier bord (25) du premier flanc longitudinal (22), de sorte que chaque seconde dent (21) est agencée affleurante à une première dent (21) correspondante ; lesdits renflements (33) étant ouverts sur le côté de la seconde face longitudinale (16) de façon à définir sur celle-ci des deuxièmes encoches longitudinales (34) respectives faisant face vers des troisièmes encoches longitudinales (35) respectives obtenues passant à travers des parois d'extrémité respectives desdits renflements (33) et agencées immédiatement adjacentes à des sections correspondantes du premier bord (27) du second flanc longitudinal (23) pourvu desdites secondes dents (21), de façon à rendre lesdites secondes sections du premier bord (27) du second flanc longitudinal élastiquement déformables.

7. Véhicule comprenant un dispositif d'éclairage (1), phare ou feu, selon la revendication 1.
